# FASCICULE DE BREVET EUROPEEN

(11) **EP 0 272 746 B1**
(45) Date de publication et mention de la délivrance du brevet: **17.03.1993**
(21) Numéro de dépôt: 87202510.1
(22) Date de dépôt: 15.12.1987
(51) Int. Cl.: F16M 11/14, G02B 7/00

(54) **Support orientable notamment, pour instruments d'optique et similaires**
Ausrichtbare Haltevorrichtung, speziell für optische Geräte und ähnliches
Orientable support, especially for optical instruments and the like

(30) Priorité: 23.12.1986 IT 3495286 U
(43) Date de publication de la demande: 29.06.1988
(73) Titulaire: Bolondi, Ivano, I-42027 Montecchio (Reggio Emilia) (IT)
(72) Inventeur: Bolondi, Ivano, I-42027 Montecchio (Reggio Emilia) (IT)
(74) Mandataire: Bettello, Luigi, Dott. Ing.

(56) Documents cités:
- AT-B- 75 728
- DE-A- 2 916 082
- DE-C- 540 163
- DE-C- 1 006 254
- DE-U- 1 803 715

## Description

La présente invention a pour objet un support pour instruments d'optique ou de photographie, tels par exemple que des appareils photographiques, des longue-vues, des télé-caméras, etc... qui soit propre à être aisément orienté suivant le désir de l'opérateur tout en se révélant particulièrement fiable sur le plan de la solidarisation entre le pied-support et l'instrument qui lui est fixé.

On connaît dans le commerce des supports dotés d'une petite tête détachable et susceptibles d'être orientés suivant toute direction désirée par l'opérateur. Ces supports connus sont en général constitués par un étrier d'appui sur lequel l'instrument est fixé à l'aide d'une ou plusieurs charnières propres à être bloquées ou débloquées par l'opérateur moyennant une commande appropriée, par exemple par un levier d'actionnement, en vue de permettre l'orientation de l'ensemble formé par l'instrument d'optique et l'étrier précité, ledit ensemble étant monté par sa base sur un pied ou trépied usuel.

Ces appareillages connus présentent l'inconvénient de n'être pas parfaitement fiables en ce qui concerne le blocage de la ou des charnières. Il suffit que l'opérateur ne serre pas suffisamment fort le dispositif de blocage pour que celui-ci permette la rotation ou la chute intempestive de l'instrument d'optique supporté, avec des conséquences évidemment nuisibles du fait de la fragilité de ce genre d'instruments.

Pour exemple le brévêt autrichien 75728 se refère à un support qui present une possibilité d' inclination trés reduite sur la verticale et n'est pas doté d'un certain dispositif de bloccage au dehors de la friction, dans la position choisie.

Pour example la publication de brévêt allemande DE 2916082 se refére à un support orientable pour instruments d'optique et similaires, qui present une partie mobile ayant une forme spherique, avec un tige reliée à une douille de fixation à la partie inférieure fixe du dispositif, consentant à la dite partie mobile de se disposer selon un angle compris entre 0° et 90°.

Le but principal de l'invention est d'autoriser une plus grande rapidité dans le positionnement correct de l'instrument d'optique.

Un autre but encore est d'assurer une précision de positionnement et un champ d'orientation plus élevés.

Le support orientable suivant l'invention est défini à la revendication 1.

Le dessin annexé, donné à titre d'exemple, permettra de mieux comprendre l'invention, les caractéristiques qu'elle présente et les avantages qu'elle est susceptible de procurer :
Fig. 1 est est une coupe axiale du support suivant l'invention à la position bloquée.
Fig. 2 montre le même support à la position de libre orientation, les deux flèches illustrant la pression de la main de l'opérateur sur le dispositif.
Fig. 3 est une vue externe de ce support à la position de blocage suivant fig. 1.
Fig. 4 illustre les possibilités d'orientation du support à l'état débloqué suivant fig. 2.

Sur ce dessin on a indiqué en 1 un étrier-support de type connu, propre à soutenir et à retenir l'instrument d'optique envisagé ; cet étrier comprend une surface d'appui 2 préférablement réalisée en une matière souple, une plate-forme rigide 3, une vis d'arrêt 4 munie d'une large douille d'actionnement 5 pour le blocage ou le déblocage de l'instrument d'optique, et un ressort 6 qui supporte la vis 4 précitée.

Le support suivant l'invention est formé par une poignée avantageusement profilée de manière anatomique et comprenant un corps principal 7 et un levier 8 qui pivote en 9 sur ledit corps 7 et qui est pourvu d'une saillie ou came 10 tournée vers le bas. Ce levier 9 comporte également une dent 11 sur laquelle est engagé un ressort de compression 12 logé à l'intérieur d'une creusure 13 du corps principal 7 de la poignée, l'extrémité opposée dudit ressort prenant appui sur une butée filetée de réglage 14.

La came 10 est destinée à coopérer avec un piston 15 dont la partie inférieure 16 est élargie de manière à présenter un profil en forme de cloche propre à épouser le profil supérieur d'un corps sphérique fixe 17 ; la partie inférieure de ce corps 17 coopère avec une bague sphérique de retenue 18.

On notera que le piston 15 peut coulisser dans un siège cylindrique 23 prévu dans le corps principal 7 de la poignée.

Le corps sphérique 17 est pourvu d'un prolongement 19 en forme de tige qui assure le raccordement entre ledit corps 17 et une douille de fixation 20 destinée à être rendue solidaire d'un support fixe connu tel qu'un trépied.

En 21 on a représenté une vis qui, en liaison avec un anneau fileté 22 et d'autres vis analogues qui n'ont pas été représentées, permet le démontage et le remontage du support et correspond donc à des détails de réalisation purement constructifs qui assurent la liaison de la bague 18 et de la poignée 7-8. Sur cette bague 18 est pratiquée une fente verticale 24 de largeur légèrement supérieure au diamètre de la tige 19 en vue de permettre le montage de celle-ci.

On va maintenant exposer le fonctionnement du support qui vient d'être décrit.

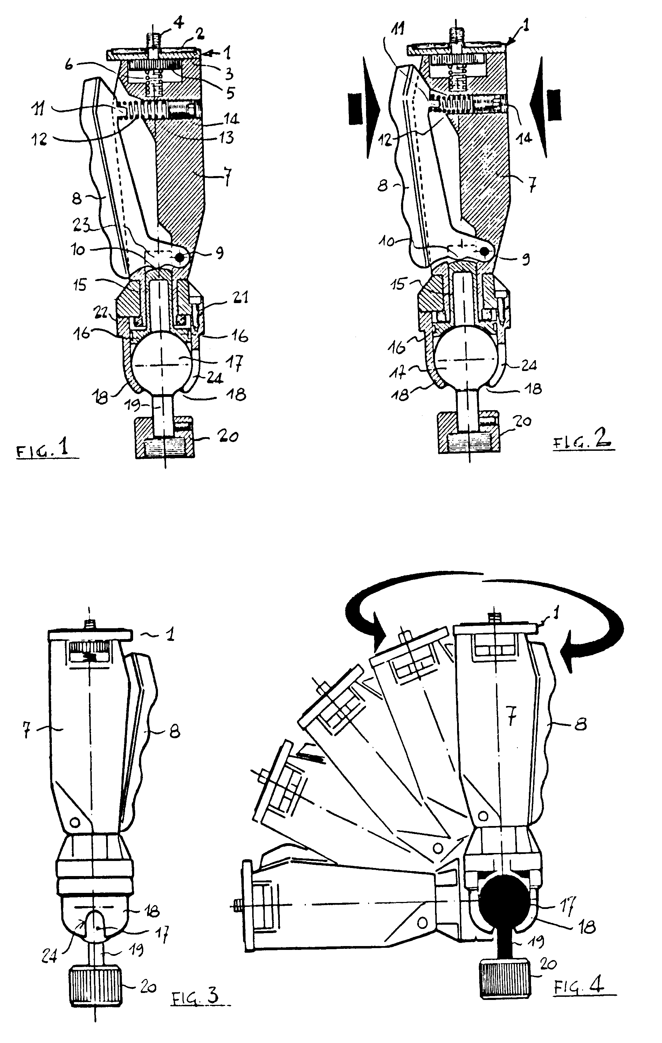

Lorsque ce support n'est pas manoeuvré par l'utilisateur, c'est-à-dire à la position illustrée en fig. 1, le corps shérique 17 est rendu solidaire de la poignée 7-8 par suite du serrage efficace exercé sur ledit corps fixe 17 par la partie élargie ou cloche 16 et par la bague 18 de cette dernière.

L'effort qui est ainsi exercé entre la cloche 16 et le corps sphérique 17 est assuré par la pression de la came 10 sur la tête du piston 15, si bien qu'il est appliqué à travers un bras de levier par le ressort 12 qui agit en 11 sur le levier 8. l'effort exercé sur la partie inférieure du corps sphérique 17 par la bague 18 provient de la réaction à l'effort exercée par la cloche 16 sur la partie supérieure dudit corps 17.

Lorsque l'opérateur exerce un effort de serrage sur la poignée 7-8 en rapprochant le levier 8 du corps principal 7 et en comprimant ainsi le ressort 12, à la façon qui a été illustrée en fig. 2 sur laquelle les deux flèches noires symbolisent l'effort exercé sur le levier 8 par la main de l'opérateur et la réaction relative de la paume sur le corps principal 7, alors que la came 10 ne prend plus appui sur la tête du piston 15.

De ce fait l'action de serrage sur le corps sphérique 17 cesse, lequel corps se comporte à la manière d'une charnière libre pour ce qui est de toute la partie supérieure formée par la poignée 7-8, ce qui a pour effet de libérer celle-ci, de telle sorte qu'il est possible d'orienter l'étrier-support 1 de l'instrument d'optique suivant tous les angles désirés tels qu'illustrés en fig. 4, c'est-à-dire inclinaison vers l'avant, inclinaison latérale, inclinaison vers l'arrière et rotation suivant l'axe de la poignée 7-8.

Dès que le levier 8 est relâché, l'action de serrage sur le corps sphérique fixe 17 s'exerce à nouveau en assurant l'immobilisation à la position choisie par l'opérateur, sans qu'intervienne aucun mouvement d'assistance.

Dans l'exemple de réalisation considéré, l'étrier-support 1 est placé dans la partie supérieure du corps 7 de la poignée, mais il va de soi que cet étrier peut être positionné sur une autre partie de ce corps, par exemple sur un côté ou à la base de celui-ci, sur une partie en saillie appropriée prévue à proximité de la bague 18.

On notera que le dispositif peut être utilisé en position retournée, la douille 20 faisant alors fonction de support pour l'instrument à orienter, tandis que la vis 4 coopère avec un support inférieur de tout type connu.

Le dispositif suivant l'invention comporte l'avantage que la force de blocage peut être modifiée en fonction du poids de l'instrument à supporter, et ce en agissant sur la butée filetée 14 associée au ressort de compression 12.

Il va en outre de soi que le support suivant l'invention est susceptible d'être utilisé non seulement en liaison avec des instruments optiques, mais avec tout autre appareillage (par exemple un microphone) dont il est nécessaire d'assurer le blocage rapide et fiable à l'aide d'une articulation en forme de charnière.

## Revendications

1. Support orientable, notamment pour instruments d'optique et similaires, qui présente une partie fixe (17) et une partie mobile (1,7,8,18), reliées l'une avec l'autre à l'aide d'une bague sphérique de retenue (18) et des moyens élastiques (16, 18) attelant la partie mobile (1,7,8,18) à la partie fixe dans une position choisie; ledit support comprenant un levier (8) servant à opérer le blocage ou déblocage des moyens élastiques (16, 18); un ressort (12) étant prévu, qui engage le levier (8) effectuant la force d'arrêt desmoyens elastiques (16, 18); une fente verticale (24) étant prévue dans la bague (18), une tige (19) solidaire de la partie fixe (17) étant reçue dans cette fente (24) lorsque le support est débloqué permettant ainsi à la partie mobile (1,7,8,18) de tourner d'un angle compris jusqu'à 90°, et de se positionner selon un angle quelconque compris entre 0° et 90° par rapport à la verticale, caractérisé en ce que la partie fixe (17) a une forme sphérique, en ce que la tige (19) est reliée à une douille de fixation (20) à la partie inférieure du support, en ce que le bord inférieur de la partie mobile (1,7,8,18) est solidaire de la bague sphérique de retenue (18), qui enveloppe la partie fixe (17), en ce que le levier (8) pivote en un point (9) situé sur le corps (7) de la partie mobile (1,7,8,18), en ce que le ressort (12) engage en un point (11) le levier (8) de manière qu'une came (10) solidaire du levier (8) soit pressée contre un piston (15) mobile à l'intérieur d'une cavité prévue dans le corps (7) de la partie mobile, et en ce que ledit piston est muni d'une cloche (16) engagée sur le profil supérieur sphérique de la partie fixe (17).

2. Support orientable, suivant la revendication 1, caractérise en ce que le piston (15), muni d'une cloche (16), bloque le support sur le corps spherique (17) en position fixe, lorsque le came (10) solidaire au levier (8) applique une pression sur le piston (15) et par consequence à la cloche (16), lorsque le levier (8) est pressé sur le corps (7) pressant le ressort (12), ce qui permet au corps (7) de tourner librement sur le corps sphérique (17) pour un angle de 360°.

3. Support suivant la revendication 2, caractérisé en ce que le ressort (12) assure la fermeture d'une poignée profilée de manière anatomique, qui comprend essentiellement un corps principal (7) et une levier (8) articulés l'un à l'autre au niveau d'un pivot (9).

4. Support suivant la revendication 3, caractérisé en ce que l'un au moins des deux éléments (7, 8) de la poignée est solidaire d'un étrier-support (1) destiné à soutenir et à retenir l'instrument envisagé à travers une surface d'appui (2) et une vis d'arrêt (4) de type interchangeable.

5. Support suivant l'une quelconque des revendications 1 à 4, caractérisé en ce que la compression du ressort (12) est réglable moyennant manoeuvre, au vissage ou au dévissage, d'une butée filetée (14) formant appui axial pour l'une des extrémités dudit ressort.

6. Support suivant l'une quelconque des revendications 1 à 5, caractérisé en ce que sur la partie extérieure en forme de bague (18) de la pince qui agit sur le corps sphérique (17) est ménagée une fente (24) dont la largeur est supérieure au diamètre de la tige (19) solidaire dudit corps.

## Claims

1. Swivelling stand, more particularly for optical and similar instruments, comprising a fixed part (17) and a movable part (1,7,8,18) which are joined to one another by means of a spherical retaining bushing (18) and elastic means (16, 18) coupling the movable part (1,7,8,18) to the fixed part in a chosen position; said stand incorporating a lever (8) whose job it is to lock or release the elastic means (16, 18); a spring (12) being provided which engages the lever (8) effecting the checking force on said elastic means (16, 18); a vertical slot (24) being provided in the bushing (18), a rod (19) rigidly joined to the fixed part (17) being received in said slot (24) when the stand is freed, thereby enabling the movable part (1,7,8,18) to rotate through an angle of up to 90° and to position itself at any angle between 0° and 90° with respect to the vertical,
characterised in that the fixed part (17) is spherical in shape, that the rod (19) is joined at a retaining collar (20) to the lower part of the stand, that the lower edge of the movable part (1,7,8,18) is rigidly connected to the spherical retaining bushing (18), which sheathes the fixed part (17), that the lever (8) pivots at a point (9) located on the body (7) of the movable part (1,7,8,18), that the spring (12) engages the lever (8) at a point (11) such that a cam (10) integral with the lever (8) is pressed against a piston (15) which moves inside a cavity provided in the body (7) of the movable part, and that said piston is equipped with a ferrule (16) which engages on the spherical upper profile of the fixed part (17).

2. Swivelling stand according to claim 1, characterised in that the piston (15), equipped with a ferrule (16), locks the stand on the spherical body (17) in a fixed position when the cam (10) integral with the lever (8) exerts a pressure on the piston (15) and consequently on the ferrule (16) as the lever (8) is squeezed against the body (7), squeezing the spring (12), which enables the body (7) to rotate freely on the spherical body (17) through an angle of 360°.

3. Stand according to claim 2, characterised in that the spring (12) provides the closure of an anatomically profiled handle which essentially comprises a principal body (7) and a lever (8) hinged to one another by a pivot pin (9).

4. Stand according to claim 3, characterised in that at least one of the two elements (7, 8) of the handle is rigidly joined to a supporting yoke (1) designed to support and retain the relevant instrument via a supporting surface (2) and an interchangeable-type locking screw (4).

5. Stand according to any of claims 1 to 4, characterised in that the compression of the spring (12) is adjustable by the operation, either screwing or unscrewing, of a threaded stop (14) which constitutes an axial support for one of the ends of said spring.

6. Stand according to any of claims 1 to 5, characterised in that the outer portion, in the form of a bushing (18), of the squeezing device which acts or the spherical body (17) incorporates a slot (24) of greater width than the diameter of the rod (19) rigidly joined to said body.

## Patentansprüche

1. Ausrichtbare Haltevorrichtung, speziell für optische Geräte und ähnliches, mit einem festen Teil (17) und einem beweglichen Teil (1, 7, 8, 18), welche über einen kugelförmigen Haltering (18) und elastische Mittel (16, 18) miteinander verbunden sind, die in einer gewählten Stellung den beweglichen Teil (1, 7, 8, 18) an den festen Teil ankoppeln, wobei die Haltevorrichtung einen Hebel (8) aufweist, mittels welchem die elastischen Mittel (16, 18) verriegelbar oder entriegelbar sind, mit einer den Hebel (8) belastbaren und die Verriegelungskraft der elastischen Mittel (16, 18) bewirkenden Feder (12) sowie einer in dem Haltering (18) vorgesehenen vertikalen Nut (24) und einer mit dem festen Teil (17) verbundenen Stange (19), welche von der Nut (24) dann aufgenommen wird, wenn die Haltevorrichtung entriegelt ist und auf diese Weise es zuläßt, daß der bewegliche Teil (1, 7, 8, 18) sich um einen Winkel bis zu 90° verdrehen kann und in einer beliebigen Winkelstellung zwischen 0° und 90° relativ zu der Vertikalen eingestellt werden kann, dadurch gekennzeichnet, daß der feste Teil (17) die Form einer Kugel aufweist, daß die Stange (19) am unteren Teil der Haltevorrichtung mit einer Befestigungshülse (20) verbunden ist, daß der untere Rand des beweglichen Teiles (1, 7, 8, 18) mit dem kugelförmigen, den festen Teil (17) umgebenden Haltering (18) kraftschlüssig verbunden ist, daß der Hebel (8) in einem auf dem Hauptstück (7) des beweglichen Teiles (1, 7, 8, 18) liegenden Punkt (9) drehbar gelagert ist, daß die Feder (12) in einem Punkt (11) den Hebel (8) in der Weise berührt, daß ein mit dem Hebel (8) verbundener Nocken (10) gegen einen beweglichen Kolben (15) andrückbar ist, der im Inneren einer in dem Hauptstück (7) des beweglichen Teiles vorgesehenen Aussparung liegt und daß dieser Kolben mit einem glockenförmigen Teil (16) ausgestattet ist, der auf dem oberen, kugelförmigen Profil des festen Teiles (17) aufliegt.

2. Haltevorrichtung nach Anspruch 1, dadurch gekennzeichnet, daß der mit dem glockenförmigen Teil (16) ausgestattete Kolben (15) die Haltevorrichtung auf dem kugelförmigen Teil (17) in der Verriegelungsstellung dann arretiert, wenn der mit dem Hebel (8) verbundene Nocken (10) auf den Kolben (15) und infolgedessen auf den glockenförmigen Teil (16) dann eine Druckkraft ausübt, wenn der Hebel (8) gegen das Hauptstück (7) gedrückt ist und damit gleichzeitig die Feder (12) zusammendrückt derart, daß sich das Hauptstück (7) auf dem kugelförmigen Teil (17) um einen Winkel von 360° frei drehen kann.

3. Haltevorrichtung nach Anspruch 2, dadurch gekennzeichnet, daß die Feder (12) die Arretierung eines anatomisch profilierten Griffes sicherstellt, welcher im wesentlichen ein Hauptstück (7) und einen Hebel (8) aufweist, die in Höhe eines Zapfens (9) miteinander gelenkig verbunden sind.

4. Haltevorrichtung nach Anspruch 3, dadurch gekennzeichnet, daß zumindest eines der beiden Elemente (7, 8) des Griffes mit einem Träger (1) verbunden ist, welcher das bestimmte Werkzeug sowie eine austauschbare Arretierschraube (4) auf einer Stützfläche (2) abstützt und festhält.

5. Haltevorrichtung nach einem der Ansprüche 1 - 4, dadurch gekennzeichnet, daß die Druckkraft der Feder (12) mittels eines mit einem Schraubgewinde ausgerüsteten Anschlages (14) durch Einschrauben oder Lösen regelbar ist, welcher ein axiales Lager für eines der beiden äusseren Enden der Feder bildet.

6. Haltevorrichtung nach einem der Ansprüche 1 - 5, dadurch gekennzeichnet, daß der äußere, die Form eines Ringes (18) aufweisende Teil des Klemmteiles, welcher auf den kugelförmigen Teil (17) einwirkt, mit einer Nut (24) ausgestattet ist, deren Breite größer ist als der Durchmesser der mit diesem Teil (17) verbundenen Stange (19).
